# EUROPÄISCHE PATENTSCHRIFT

(11) **EP 1 288 761 B1**
(45) Veröffentlichungstag und Bekanntmachung des Hinweises auf die Patenterteilung: **17.05.2017**
(21) Anmeldenummer: 02405597.2
(22) Anmeldetag: 12.07.2002
(51) Int. Cl.: G05D 16/20

(54) **Verfahren zur Regelung eines Niederdruckbypassystems**
Method for controlling a low pressure bypass system
Procédé de régulation d'un système de bipasse basse pression

(30) Priorität: 31.07.2001 CH 14222001
(43) Veröffentlichungstag der Anmeldung: 05.03.2003
(73) Patentinhaber: General Electric Technology GmbH, 5400 Baden (CH)
(72) Erfinder: Schnaithmann, Kurt, 69469 Mannheim (DE); Klatt, Stefan, 68163 Mannheim (DE)
(74) Vertreter: General Electric Technology GmbH

(56) Entgegenhaltungen:
- US-A- 4 132 076
- US-A- 4 254 627
- US-A- 4 455 836

## Beschreibung

### TECHNISCHES GEBIET

Die vorliegende Erfindung betrifft ein Verfahren zur Regelung eines Niederdruckbypasssystems für eine Dampfturbinenanlage mit Zwischenüberhitzer, insbesondere zu deren Hochfahren aus dem kalten Zustand, zum Leerlauf- und Schwachlastbetrieb sowie nach Lastabschaltungen.

### STAND DER TECHNIK

Dampfturbinenanlagen mit Zwischenüberhitzer sind Dampfturbinen, bei welchen der aus Turbinen bestimmter Druckstufen austretende Dampf vor dem Einleiten in eine Turbine mit niedrigerem Eintrittsdruck in einem Zwischenüberhitzer nochmals erwärmt wird, und nach Passieren der Einheiten mit niederem Druck einem Kondensator zugeführt wird.

US 4 132 076 offenbart eine Dampfturbinenanlage des Stands der Technik.

Zum Anfahren des Blockes hat es sich, abhängig von der Betriebsweise, aus verschiedenen Gründen als vorteilhaft erwiesen, mittels eines Dampfumleitsystems zunächst den Kessel auf eine Mindestleistung zu belasten, und dann mit dem Anfahren der Turbine zu beginnen. So wird bei einem kaskadierenden Umleit- oder Bypasssystem ("cascading bypass" oder "wet reheater bypass") der Frischdampf mittels eines Hochdruck-Umleitventils (HD-Umleitventil) mit nachgeschalteter Wassereinspritzung zur "kalten" Zwischenüberhitzerschiene geleitet und nach Überhitzung im Zwischenüberhitzer von der "heissen" Zwischenüberhitzerschiene über ein ND-Umleitventil in den Kondensator geführt. Dieses Umleitsystem kommt auch zum Eingriff, falls nach einem Lastabwurf (z.B. bei Öffnen des Netzschalters) oder bei Turbinenschnellschluss die Turbine den erzeugten Dampf nicht vollständig oder überhaupt nicht übernehmen kann. Während das HD-Umleitsystem im wesentlichen von den Anforderungen des Kessels abhängt, werden Auslegung und Regelung des ND-Umleitsystems durch die Dampfturbine bestimmt. Kernstück der Regelung eines ND-Umleitregelsystems ist die Druckregelung der heissen Zwischenüberhitzerleitung. In der Regel besteht die Sollwertführung für das ND-Umleitsystem aus einem Mindestdruck und einer Gleitdruckkennlinie, die sich über eine Maximalauswahl ablösen.

In der Vergangenheit gab es verschiedene Konzepte zur Bildung der Gleitdruckkennlinie für die Sollwertführung des Zwischenüberhitzerdrucks:
- Ableitung aus der Leistung.
- Ableitung aus dem Druck vor Beschaufelung der Hochdruckturbine
- Ableitung aus der Zwischenüberhitzer-Dampfmenge, die gerechnet oder gemessen werden konnte.

All diesen Konzepten ist gemeinsam, dass durch geeignete Massnahmen eine bestimmte Sollwertkennlinie gebildet wird, die im Turbinenbetrieb über der "natürlichen" Gleitdruckkennlinie, bestimmt durch die Massenschluckfähigkeit der MD-Turbine, liegt, sodass die ND-Umleitstation geschlossen bleibt.

Derartige Betriebsweisen sind beispielsweise beschrieben in : Lehrhefte für die Ausbildung zum Kraftwerker", Heft 9 Turbinen, von Dipl. Ing. U. Gloy, Dipl. Ing. E. Höxtermann und Dipl. Ing. J. Pasch, Kapitel 7.4.5 Umleiteinrichtung, Verlag technisch wissenschaftlicher Schriften VGB-Kraftwerkstechnik GmbH Essen, Best. Nr. L 909.

### DARSTELLUNG DER ERFINDUNG

Der Erfindung liegt demnach die Aufgabe zugrunde, ein Verfahren zur Regelung einer Dampfturbinenanlage mit einem zwischen Hochdruckturbine und Mitteldruck- oder Niederdruckturbine angeordneten Zwischenüberhitzer zur Verfügung zu stellen, wobei die Dampfturbinenanlage weiterhin einen Niederdruckbypass mit einem ND-Umleitventil umfasst, welcher vom Zwischenüberhitzeraustritt in einen Kondensator führt. Des weiteren ist es Aufgabe der Erfindung, eine Vorrichtung zur Durchführung eines solchen Verfahrens zur Verfügung zu stellen. Das Verfahren soll es erlauben, die Zwischenüberhitzerdruck-Sollwertführung der ND-Umleitstation so zu bestimmen, das einerseits die ND-Umleitstation im Turbinenbetrieb geschlossen bleibt, andererseits aber den Anforderungen aus dem Anfahr- und Schwachlastbetrieb der HD-Dampfturbine Rechnung getragen wird, sodass z. B. Ventilation der HD-Turbine verhindert oder begrenzt wird.

Die vorliegende Erfindung löst diese Aufgabe, indem zur Regelung des ND-Umleitventiles beim Hochfahren, bei (Teil-) Lastabschaltungen oder bei Leerläufen Kennlinien für den Zwischenüberhitzer-Drucksollwert verwendet werden, welche sowohl abhängig sind von wenigstens einem ersten Parameter, namentlich der an der Anlage anliegenden Last und/oder vom Druck vor der Hochdruckturbinenbeschaufelung und/oder von der Zwischenüberhitzerdampfmenge, als auch von einem zweiten Parameter, namentlich der Hochdruckturbinen-Abdampftemperatur, und/oder von der Temperatur und/oder vom Druck des in die Hochdruckturbine eingeleiteten Frischdampfes, und/oder von Zwischenüberhitzerdruck.

Der Kern der Erfindung besteht somit darin, nicht nur eine einzelne Kennlinie für den Zwischenüberhitzer-Drucksollwert der ND-Umleiteinrichtung in Abhängigkeit einer der aus dem Stand der Technik dafür bekannten Grössen, nämlich der an der Anlage anliegenden Last und/oder dem Druck vor der Hochdruckturbinenbeschaufelung und/oder der Zwischenüberhitzerdampfmenge vorzusehen, sondern vielmehr ein Kennlinienfeld, das ausgehend von einer oder mehreren der vorgenannten Grössen nach dem Stand der Technik den Zwischenüberhitzer-Drucksollwert zusätzlich abhängig von der Hochdruck-Abdampftemperatur der Hochdruckturbine und/oder von der Temperatur und/oder vom Druck des in die Hochdruckturbine eingeleiteten Frischdampfes, und/oder vom Zwischenüberhitzerdruck in der kalten Zwischenüberhitzerschiene festlegt.

Die Schluckfähigkeit der ND-Umleitstation wird dabei vorzugsweise so ausgelegt, dass die zugehörige Gleitdruckkennlinie bei voller Öffnung des ND-Umleitventils unterhalb der natürlichen Gleitdruckkennlinie, bestimmt durch die Schluckfähigkeit der MD-Turbine, liegt.

Gemäß einer ersten bevorzugten Ausführungsform des Verfahrens, liegen die Kennlinien als Funktion der an der Anlage anliegenden Last, und/oder des Druckes vor der Hochdruckturbinenbeschaufelung und/oder der Zwischenüberhitzerdampfmenge, für unterschiedliche Werte von Hochdruckturbinen-Abdampftemperatur, und/oder von der Temperatur und/oder vom Druck des in die Hochdruckturbine eingeleiteten Frischdampfes, und/oder vom Zwischenüberhitzerdruck zwischen einer maximalen, vom Drucksollwert bei Turbinenbetrieb bestimmten Kennlinie, und einer minimalen, vom minimal zulässigen Druck bei voller Zwischenüberhitzermenge bestimmten Kennlinie. Die maximale, vom Drucksollwert bei Turbinenbetrieb bestimmte Kennlinie liegt dabei typischerweise um ca. 5 Prozent oberhalb der natürlichen Gleitdruckkennlinie, welche durch die Schluckfähigkeit der MD-Turbine bestimmt wird. Ausserdem weisen üblicher Weise die Kennlinien einen Maximalwert auf, welche durch den Öffnungsdruck der Sicherheitsventile gegeben ist.

Gemäß einer weiteren bevorzugten Ausführungsform des Verfahrens sind die Kennlinien in den Bezug auf die an der Anlage anliegende Last, respektive in Bezug auf den Druck vor der Hochdruckturbinenbeschaufelung, respektive in Bezug auf die Zwischenüberhitzerdampfmenge im wesentlichen linear. Weiterhin bevorzugt verlaufen die Kennlinien auch in Bezug auf die Hochdruckturbinen-Abdampftemperatur, respektive in Bezug auf die Temperatur respektive in Bezug auf den Druck des in die Hochdruckturbine eingeleiteten Frischdampfes, respektive in Bezug auf den Zwischenüberhitzerdruck im wesentlichen linear. Die Kennlinien verlaufen ausserdem vorzugsweise durch einen gemeinsamen Nullpunkt, das heisst für unterschiedliche Werte von Hochdruckturbinen-Abdampftemperatur, respektive Temperatur respektive Druck des in die Hochdruckturbine eingeleiteten Frischdampfes, respektive Zwischenüberhitzerdruck resultieren Drehungen um diesen gemeinsamen Nullpunkt.

Gemäß einer anderen bevorzugten Ausführungsform des Verfahrens wird als weiterer Regelparameter zur Bestimmung der Kennlinien der Druck in der kalten Zwischenüberhitzer(ZÜ)leitung vor ZÜ-Eintritt verwendet.

Bei einem besonders bevorzugten Verfahren wird der Sollwert für die Hochdruck-Abdampftemperatur durch die Frischdampftemperatur bestimmt, indem die Hochdruck-Abdampftemperatur auf einen Wert geregelt wird, welcher um einen konstanten Wert von insbesondere bevorzugt im Bereich von ca. 100 Grad Celsius unterhalb der Frischdampftemperatur liegt. Dabei wird aber der Sollwert für die Hochdruck-Abdampftemperatur stets innerhalb eines Bereiches zwischen einem maximalen Wert und einem minimalen Wert gehalten, wobei der minimale Wert typischerweise im Bereich von 320 Grad Celsius liegt, und der maximale Wert typischerweise im Bereich von 420 bis 450 Grad Celsius. Dies bedeutet konkret, dass für Frischdampftemperaturen oberhalb von z.B. 520 Grad Celsius die Hochdruck-Abdampftemperatur immer auf einen Wert von 420 Grad Celsius maximal begrenzt geregelt wird, und dass für Frischdampftemperaturen unterhalb von 420 Grad Celsius immer auf einen Wert von 320 Grad Celsius minimal begrenzt geregelt wird.

Gemäß einer weiteren bevorzugten Ausführungsform des obigen Verfahrens wird die Regelung des ND-Umleitventils bei gleichzeitiger Vertrimmung der Hochdruckturbine und der Mitteldruck- respektive Niederdruckturbine über ein in der Frischdampfleitung vor der Hochdruckturbine angeordnetes Einlassventil sowie ein vor der Mitteldruckturbine angeordnetes Abfangventil durchgeführt, wobei insbesondere bevorzugt der Vertrimmungszustand von Hochdruck- und Mitteldruck-/Niederdruckturbine ebenfalls zur Ermittlung der relevanten Kennlinien hinzugezogen wird. Die Vertrimmung allein, wie sie beispielsweise in der US 4,132,076 beschrieben wird, kann unter bestimmten Bedingungen zu einem vollständigen Schliessen des Abfangventils führen, was zur Folge hat, dass Mitteldruck- und Niederdruckturbine nicht mehr von Dampf durchströmt werden, und die Mindestkühldampfmenge für MD/ND nicht mehr gewährleistet wird. Die Kombination mit der Regelung über das ND-Umleitventil kann dies verhindern, da dadurch die HD-Abdampftemperatur abgesenkt werden kann, ohne dass das Abfangventil vollständig geschlossen werden muss.

Weitere bevorzugte Ausführungsformen des erfindungsgemässen Verfahrens finden sich in den abhängigen Patentansprüchen.

Des weiteren betrifft die vorliegende Anmeldung eine Vorrichtung zur Durchführung des obengenannten Verfahrens. Die Vorrichtung zeichnet sich dabei insbesondere dadurch aus, dass eine Einheit zur Berechnung des Zwischenüberhitzer-Sollwertes angeordnet ist, welche aus den die Kennlinien beeinflussenden Prozesswerten der Dampfturbinenanlage die diesen Werten entsprechenden Kennlinien berechnet und über eine Bypass-Kontrolleinheit das Niederdruck-Umleitventil prozessabhängig steuert. Bevorzugt ist ausserdem eine Hochdruck/Mitteldruck-Trimmeinheit zur Vertrimmung von Hochdruck- und Mitteldruckturbine angeordnet, welche den Vertrimmungszustand der Einheit zur Berechnung des Zwischenüberhitzer-Sollwerts zuführen kann.

Weitere bevorzugte Ausführungsformen der erfindungsgemässen Vorrichtung finden sich in den abhängigen Patentansprüchen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung einer Dampfturbinenanlage mit einer Regelvorrichtung zur Regelung des ND-Bypass;
- Fig. 2: Darstellung des Zwischenüberhitzer-Drucksollwertes als Funktion der Zwischenüberhitzermenge bei verschiedenen Betriebsweisen, insbesondere unter Berücksichtigung des Regelbereiches;
- Fig. 3: Darstellung der Abhängigkeit der Hochdruckturbinen-Abdampftemperatur T_{HD} vom Zwischenüberhitzer-Druck P₂ sowie von der Hochdruck-Eintrittsenthalpie E_{FD}, bei einem Trimmverhältnis F_{HP}/F_{IP} von 1/1; und
- Fig. 4: Darstellung analog Fig. 3, jedoch bei einem Trimmverhältnis F_{HP}/F_{IP} von 10/1.

### WEGE ZUR AUSFÜHRUNG DER ERFINDUNG

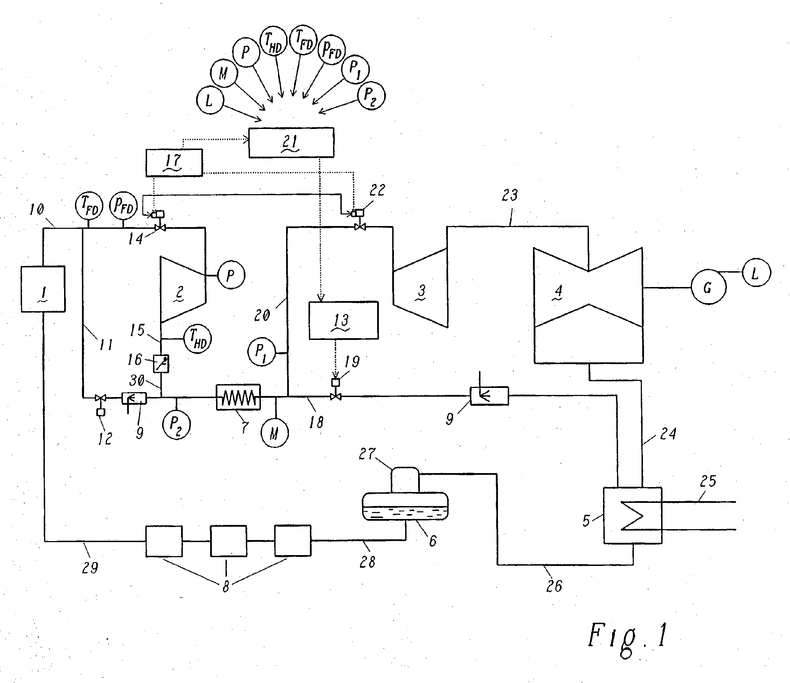

Figur 1 zeigt zunächst eine konventionelle Dampfturbinenanlage mit Zwischenüberhitzer 7 und drei Dampfstufen, einer Hochdruckturbine 2, einer Mitteldruckturbine 3 und einer Niederdruckturbine 4. Die Hochdruckturbine 2 wird über eine Frischdampfleitung 10 mit heissem Dampf aus dem Kessel 1 beaufschlagt. Die Frischdampfleitung 10 weist dabei ein Einlassventil 14 auf, mit welchem der Eintritt in die Hochdruckturbine 2 geregelt werden kann. Hinter der Hochdruckturbine 2 wird der Dampf in der HD-Abdampfleitung 15 über ein Rückschlagventil 16 und eine kalte Zwischenüberhitzerleitung 30 einem Zwischenüberhitzer 7 zugeführt, und anschliessend über eine Leitung 20, der heissen Zwischenüberhitzerleitung, welche ihrerseits von einem Abfangventil 22 geregelt werden kann, dem Eingang in die Mitteldruckturbine 3 zugeführt. Der aus der Mitteldruckturbine 3 austretende Dampf 23 wird zuletzt der Niederdruckturbine 4 zugeführt, und in dieser in einem letzten Schritt entspannt. Die drei Turbinen 2, 3, und 4 treiben dabei einen Generator G zur Stromerzeugung an. Hinter der Niederdruckturbine 4 wird der beinahe vollständig entspannte Dampf 24 einem Kondensator 5 zugeführt, welcher mit einem Kühlmedium 25 (gasförmig oder flüssig) gekühlt wird, was dazu führt, dass hinter dem Kondensator das Wasser 26 im flüssigen Zustand vorliegt. Dieses Wasser wird nun mit oder ohne vorherige Vorwärmung einem Speisewasserbehälter 6, gegebenenfalls mit aufgesetztem Entgaser 27, zugeführt, und dort bereit gehalten. In einem geschlossenen Kreislauf wird das entgaste Wasser 28 dem Speisewasserbehälter 6 entnommen, in Vorwärmstufen 8 erwärmt und z.B. als Dampf 29 in den Kessel 1 zur Erhitzung eingeleitet.

Zur Kontrolle einer derartigen Dampfturbinenanlage, insbesondere bei Lastabschaltung oder beim Anfahren sind nun ausserdem zusätzliche mögliche Dampfführungen vorgesehen. So z.B. ist ein Hochdruckbypass 11 angeordnet, welcher über ein Hochdruckumleitventil (HD-Umleitventil) 12 regelbar die Frischdampfleitung 10 vor dem Einlassventil 14 mit der kalten Zwischenüberhitzerleitung 30 zwischen Hochdruckturbine 2 und Zwischenüberhitzer 7 hinter dem Rückschlagventil 16 verbindet. Dieser Hochdruckbypass 11 mit zusätzlicher Wassereinspritzung 9 hinter dem HD-Umleitventil 12 erlaubt ein Überbrücken der Hochdruckturbine 2. Des weiteren ist ein über ein Niederdruckumleitventil (ND-Umleitventil) 19 regelbarer Niederdruckbypass 18 zwischen der Leitung hinter dem Zwischenüberhitzer 7 und dem Kondensator 5 angeordnet. Der Niederdruckbypass 18 erlaubt ein Überbrücken von Mitteldruckturbine 3 und Niederdruckturbine 4, was insbesondere beim Hochfahren der Anlage aus dem kalten Zustand, im Leerlauf oder bei (Teil-)Lastabschaltungen notwendig sein kann. Um eine starke Überhitzung von Teilen der Anlage zu verhindern, ist auch im Niederdruckbypass 18 die Möglichkeit einer Einspritzung 9 von Wasser in die Leitung 18 vor Einleitung in den Kondensator 5 vorgesehen. Niederdruck- und Hochdruckbypässe bilden zusammen das eingangs erwähnte kaskadierende Umleitsystem.

Zur Kontrolle eines Anfahrens aus dem Kaltzustand und gegen übermässige Erhitzung der Hochdruckturbine 2 kann ausserdem eine Anfahr- oder Entlastungsleitung vorgesehen sein, welche, zwischen Rückschlagventil 16 und Hochdruckturbine 2 abzweigend, die Hochdruckturbine 2 mit dem Kondensator 5 verbindet. Auch in dieser Entlastungsleitung ist dann normalerweise ein Ventil sowie eine Wassereinspritzung vorgesehen. Diese Anordnung einer zusätzlichen Entlastungsleitung mit Wassereinspritzung ist z.B. aus der DE 2837502 C2 bekannt, und in dieser als vorteilhaft für Lastabschaltung und Anfahren beschrieben.

Zur Regelung einer derartigen Dampfturbinenanlage sind in diesem Zusammenhang die HD/MD-Trimmeinheit 17, die Einheit zur Berechnung des Zwischenüberhitzer-Sollwerts 21 sowie die Bypass-Kontrolleinheit 13 von Belang. Da die Hochdruck-Abdampftemperatur T_{HD} in gewissen Betriebszuständen (Hochfahren, Teillastbetrieb, Lastabschaltungen) die Tendenz hat, kritische Werte zu überschreiten, und zu Materialbeschädigungen Anlass zu geben, muss dieser Prozessgröße besondere Beachtung geschenkt werden. Die Hochdruck-Abdampftemperatur T_{HD} hängt dabei von diversen Grössen ab. So wird der Wert von T_{HD} vom Massenstrom durch die Hochdruckturbine 2, vom Gegendruck, von der Frischdampftemperatur T_{FD} sowie vom Frischdampfdruck p_{FD} (je höher p_{FD}, desto höher T_{HD}) beeinflusst.

Die HD/MD-Trimmeinheit 17 dient nun dazu, beim Anfahren, oder im (Teil-) Lastbetrieb die Hochdruckturbine 2 und die Mitteldruckturbine 3 respektive die Niederdruckturbine 4 gegeneinander zu vertrimmen. Unter Vertrimmung versteht man in diesem Zusammenhang, dass das Einlassventil 14 bei zu hoher Temperatur T_{HD} beim Hochdruckturbinenaustritt weiter geöffnet wird, während gleichzeitig das Abfangventil 22 geschlossen wird. Diese relative Vertrimmung führt zu einem gezielten Absinken der Temperatur T_{HD} beim Hochdruckturbinenaustritt. Diese Vertrimmung ist beispielsweise in der US 4,132,076 ausführlich beschrieben.

Wie bereits oben erwähnt, findet die Regelung des Zwischenüberhitzerdruckes P₁ nach dem Stand der Technik derart statt, dass eine Kennlinie entweder in Funktion des Druckes P bei der ersten Hochdruckturbinenbeschaufelung, oder in Funktion der an der Dampfturbinenanlage anliegenden Last, oder in Funktion des durch den Zwischenüberhitzer 7 strömenden Massenstromes, resp. der Zwischenüberhitzerdampfmenge M, festgelegt und über das ND-Umleitventil 19 eingestellt wird.

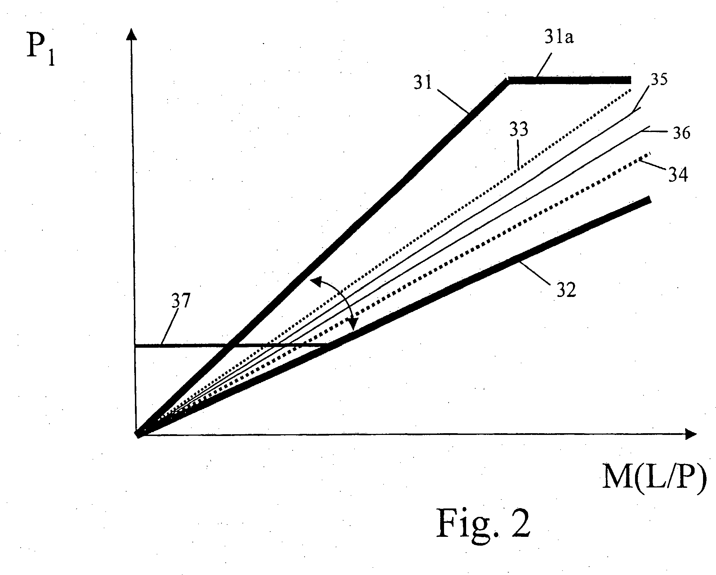

Figur 2 zeigt z. B. eine derartige Kennlinie 31 für den Drucksollwert Pₛₒₗₗ bei Turbinenbetrieb als Funktion des Massenstromes M. Ähnliche Kennlinien gelten in Funktion der an der Dampfturbinenanlage anliegenden Last L oder in Funktion des Druckes P an der ersten Hochdruckturbinenbeschaufelung. Die Kennlinie 31 ist in Bezug auf den Massenstrom im wesentlichen linear und verläuft durch den Nullpunkt. Dabei ist zu beachten, dass sich beim Hochfahren die Kennlinie 31 als Maximalwert aus dem Minimaldruck 37, der geneigten Flanke der Kennlinie 31, sowie einem Maximalwert 31a, welcher durch den Maximaldruck der Sicherheitsventile im Zwischenüberhitzer 7 gegeben ist, zusammensetzt. Konkret heisst das, dass beim Hochfahren zunächst unter Öffnung der Bypässe (HD-Umleitventil 12 und ND-Umleitventil 19 vollständig offen) bei gleichzeitig geschlossenem Einlassventil 14 und Abfangventil 22 der Kessel 1 soweit hochgefahren wird, bis sich der geforderte Minimaldruck 37 einstellt. Bereits bei diesem Hochfahren werden die Turbinen gedreht, jedoch ohne dass sie von Dampf durchströmt werden. Hat sich der geforderte Minimaldruck 37 eingestellt, so werden, ausgelöst durch das Erreichen von geforderten anderen kritischen Prozesswerten, die Turbinen 2, 3, und 4 bei gestaffelter oder gleichzeitiger teilweiser Öffnung der Ventile 14 und 22 angestoßen. Die Ventile 22 und 19 werden dabei gegenläufig synchron geöffnet respektive geschlossen.

Grundsätzlich ergeben sich nun im Diagramm nach Figur 2 verschiedene typische Kennlinien. Auf der einen Seite gibt es die natürliche Gleitdruckkennlinie 33 bei Turbinenbetrieb, welche den ungeregelten Zustand reflektiert, das heisst die Abhängigkeit des Zwischenüberhitzerdruckes P₁ als Funktion des Massenstromes M durch den Zwischenüberhitzer 7 bei variabler Kesselleistung. Auf der anderen Seite gibt es eine Kennlinie 32 minimal zulässigen Druckes bei voller Zwischenüberhitzermenge. Die Kennlinie 32 wird bestimmt durch den maximal zulässigen Druckabfall über der Hochdruckturbine 2 sowie durch die maximale Strömungsgeschwindigkeit im Zwischenüberhitzer 7 oder anderweitige an den Zwischenüberhitzer 7 angeschlossene Dampfverbraucher. Ausserdem gibt es eine Gleitdruckkennlinie 34 bei Bypassbetrieb, welche vorteilhafterweise zwischen der natürlichen Gleitdruckkennlinie 33 bei Turbinenbetrieb und der Kennlinie 32 für den minimal zulässigen Druck bei voller Zwischenüberhitzermenge liegt. Die Gleitdruckkennlinie 34 reflektiert die Abhängigkeit des Druckes P₁ in Abhängigkeit des Massenstromes M durch den Zwischenüberhitzer 7 bei vollständig geöffneten Ventilen 12 und 19. Die Schluckfähigkeit des Bypasssystems sollte größer sein als jene der Turbinen, und folglich sollte die Gleitdruckkennlinie 34 unterhalb der natürlichen Gleitdruckkennlinie 33 liegen.

Typischerweise wird nun der Sollwert für die Regelung des Ventils 19 gemäss der Kennlinie 31 eingestellt, das heisst etwas oberhalb der natürlichen Gleitdruckkennlinie 33. Typischerweise liegt die Kennlinie 31 in ihrem geneigten Bereich ca. 5 Prozent oberhalb der natürlichen Gleitdruckkennlinie 33.

Erfindungsgemäss wird nun aber nicht einfach mit einer einzigen Kennlinie 31 gearbeitet, welche ihrerseits nur vom Massenstrom M, der Leistung L, oder dem Druck P abhängt, sondern es wird vielmehr eine Kennlinienschar verwendet, welche zwischen den begrenzenden Kennlinien 31 und 32 angeordnet ist. Die Auswahl, welche der Kennlinien zur Regelung verwendet wird, geschieht in Abhängigkeit weiterer Parameter, insbesondere in Abhängigkeit der Hochdruck-Abdampftemperatur T_{HD} und/oder der Frischdampftemperatur T_{FD} und/oder des Frischdampfdrucks p_{FD}, und/oder des Druckes P₂ in der kalten Zwischenüberhitzerleitung 30. Die Kennlinien verlaufen dabei im wesentlichen linear und durch einen gemeinsamen Nullpunkt, das heisst die zusätzlichen Parameter rotieren die Kennlinien gewissermassen um diesen Nullpunkt.

Zur Kennlinienermittlung kommen in diesem Zusammenhang Regler mit und ohne I-Anteil in Frage.

Als Beispiel finden sich in Figur 2 ausserdem zwei Vertreter aus einer möglichen Kennlinienschar. Die Sollwertlinie 35 steht dabei für Sollwerte für große T_{HD} bei einem P-Regler, und die Sollwertlinie 36 für den entsprechenden Sollwert für niedrigeres T_{HD}.

Als Beispiel für eine mögliche Abhängigkeit einer Kennlinienschar von der Frischdampftemperatur T_{FD} kann eine Regelung genannt werden, bei welcher über das ND-Umleitventil 19 die Hochdruck-Abdampftemperatur T_{HD} auf einen Wert geregelt wird, welcher um einen konstanten Wert unterhalb der Temperatur des Frischdampfes T_{FD} liegt. Typisch in diesem Zusammenhang ist es z.B. den Wert von T_{HD} auf einen 100 Grad Celsius niedrigeren Wert als T_{FD} zu regeln, wobei aber T_{HD} auf jeden Fall innerhalb eines Bereiches yon 320 Grad Celsius bis 420 respektive 450 Grad Celsius liegt. Mit anderen Worten wird T_{HD} für alle Werte von T_{FD} oberhalb von 520 respektive 550 Grad Celsius auf T_{HD} 420 respektive 450 Grad Celsius geregelt, und für alle Werte von T_{FD} unterhalb von 420 Grad Celsius auf T_{HD} 320 Grad Celsius, während im Zwischenbereich T_{HD} auf T_{HD} = T_{FD} - 100 Grad Celsius eingestellt wird:

| | |
|---|---|
| T_{HD} = 420 resp. 450°C | für T_{FD} > 520 resp. 550 °C |
| T_{HD} = T_{FD} - 100°C | für 420 ≤ T_{FD} ≤ 520 resp. 550 °C |
| T_{HD} = 320°C | für T_{FD} < 420°C |

Wie bereits oben erwähnt, erweist es sich als vorteilhaft, die Regelung zusätzlich in Abhängigkeit der Vertrimmung auszugestalten. Dazu ist die HD/MD-Trimmeinheit 17 derart an die Einheit 21 zur Berechnung des Zwischenüberhitzer-Sollwerts angebunden, dass der Vertrimmungszustand der Ventile 14 und 22 als weiterer Parameter zur Bestimmung der Kennlinien hinzugezogen werden kann. Dies erweist sich z.B. insbesondere dann als vorteilhaft, wenn die Regelung der Hochdruck-Abdampftemperatur T_{HD} auf Grund der Vertrimmung in einen Bereich gerät, in welchem das Abfangventil 22 beinahe vollständig geschlossen wird. Das Schliessen des Abfangventils 22 hat zur Folge, dass die Turbinen 3 und 4 nicht mehr von Dampf durchströmt werden, und damit auch keine Mindestkühldampfmenge mehr gewährleistet ist. Dieser Zustand kann durch eine entsprechende Sollwertermittlung für das ND-Umleitventil 19 verbessert werden.

Für eine Regelung des ND-Umleitventiles 19 in vorausschauender Weise wird bevorzugt der Frischdampfdruck p_{FD} zur Ermittlung der relevanten Kennlinien verwendet. Die Verwendung des Druckes P₂ in der kalten Zwischenüberhitzerleitung erweist sich insbesondere bei Kombianlagen als vorteilhaft, bei welchen der Druckabfall über dem Zwischenüberhitzer 7 größere Werte annehmen kann.

Abschließend kann gesagt werden, dass die oben geschilderte automatische Korrektur des Zwischenüberhitzer-Drucksollwertes im Sinne eines optimalen Turbinenbetriebes bewirkt wird, auch unter Berücksichtigung von Kesselanforderungen. Es können sowohl die Auswirkungen variabler HD-Eintrittsenthalpie und des Zwischenüberhitzer-Druckes als auch die Forderung nach Mindestkühldampfmenge für MD/ND berücksichtigt werden. Insbesondere in Verbindung mit der Vertrimmung stellt es einen signifikanten Beitrag zur Anfahroptimierung dar. Das Konzept ist flexibel im Fall von variablen Hochdruckaustrittstemperaturen T_{HD}, und erlaubt es, den Zwischenüberhitzerdruck solange wie möglich hoch zu halten.

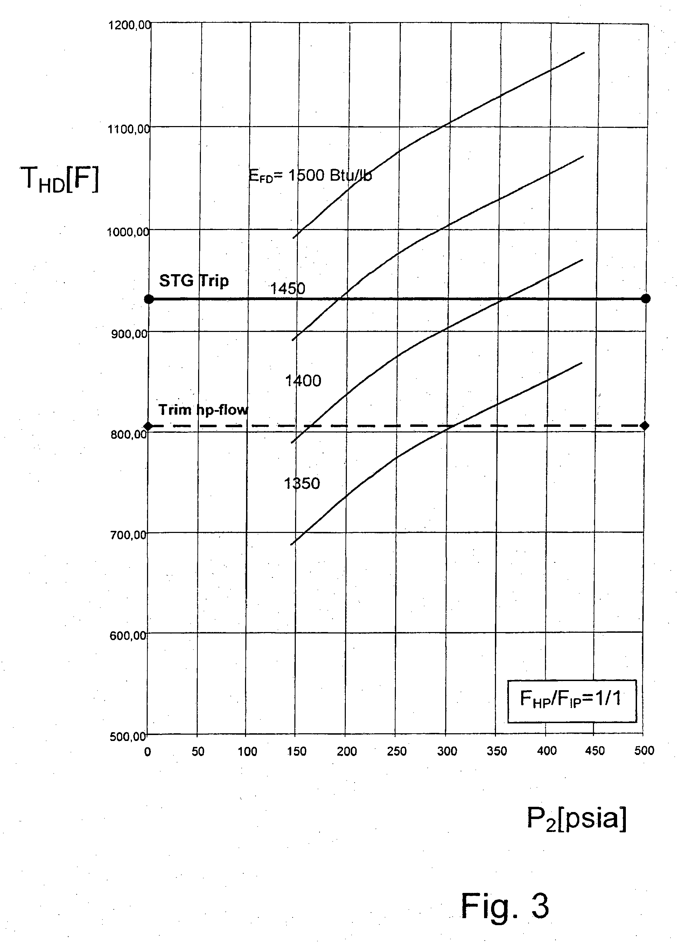

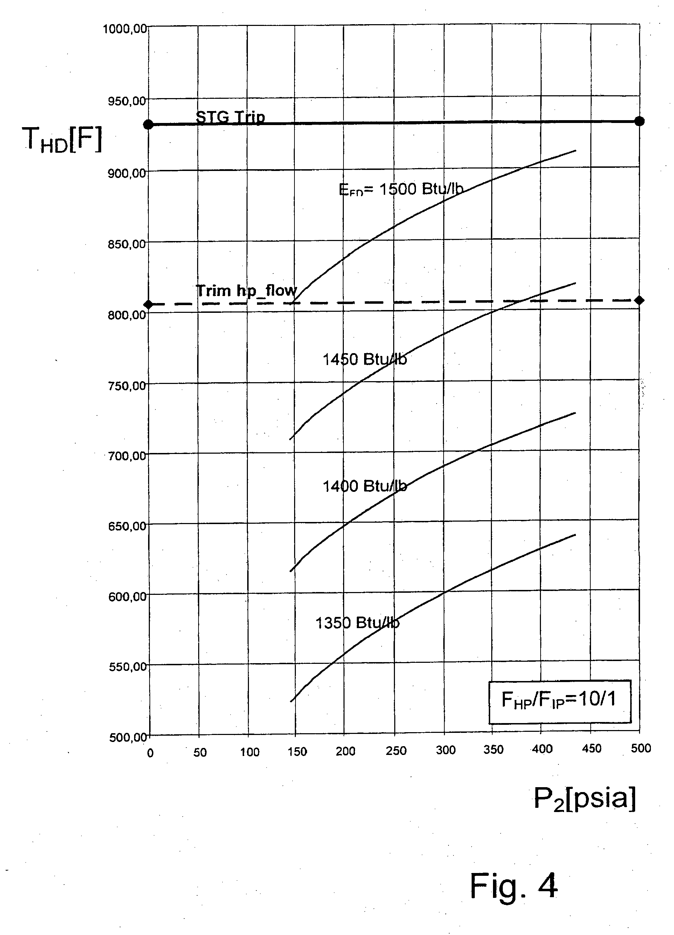

Die Figuren 3 und 4 dienen der Illustration der Abhängigkeit der Hochdruckturbinen-Abdampftemperatur T_{HD} vom Zwischenüberhitzer-Druck P₂ der kalten Zwischenüberhitzerschiene sowie von der Hochdruck-Eintrittsenthalpie E_{FD}. Der auf der x-Achse aufgetragene Druck ist dabei in "absolute pounds per square inch" (psia) aufgetragen (1 psia = 14.5 bar), die Temperatur auf der y-Achse in Fahrenheit (F), und die Enthalpie in BTU/Ib (1 BTU/Ib = 2326 J/kg). Figur 3 zeigt dabei die Verhältnisse, wie sie typischerweise beim kalten oder warmen Hochfahren eingestellt werden, das heisst bei einem Trimmverhältnis F_{HP}/F_{IP} (Verhältnis von Massenstrom durch Hochdruckturbine zu Massenstrom durch Mitteldruck- respektive Niederdruckturbine) von 1/1. Figur 4 dagegen zeigt die Verhältnisse wie sie typischerweise beim heißen Hochfahren eingestellt werden, das heisst bei einem Trimmverhältnis F_{HP}/F_{IP} von 10/1 (das heisst für zehnmal größeren Massenstrom durch die Hochdruckturbine).

Der Vergleich der beiden Figuren zeigt, wie für zunehmendes Trimmverhältnis die Hochdruckturbinen-Abdampftemperatur T_{HD} bei konstanter Hochdruck-Eintrittsenthalpie E_{FD} abnimmt. Ausserdem ist der Zusammenhang zwischen Eintrittsenthalpie E_{FD} und Hochdruckturbinen-Abdampftemperatur T_{HD} bei konstantem Zwischenüberhitzer-Druck P₂ erkennbar. Ebenso erkennbar ist die Tatsache, dass zur Konstanthaltung der Hochdruck-AbdampftemperaturT_{HD} bei zunehmender Hochdruck-Eintrittsenthalpie E_{FD} der Druck P₂ in der kalten Zwischenüberhitzerleitung 30 gesenkt werden muss.

Die mit STG Trip (Steam Turbine Generator Trip) bezeichnete horizontale Linie zeigt den Maximalwert der Hochdruckturbinen-Abdampftemperatur (500 Grad Celsius respektive 932 F), das heisst bei Überschreiten dieser Temperatur in der HD-Abdampfleitung 15 wird typischerweise über eine Schutzschaltung die Turbine abgestellt, wobei die Hochdruckturbine und die Mitteldruck- respektive Niederdruckturbine mittels der Bypass-Leitungen 11 und 18 überbrückt werden. Dies um zu verhindern, dass der hohe Wert von T_{HD} zu Schäden an der Anlage führt.

Die mit Trim hp_flow bezeichnete gestrichelte horizontale Linie bei einer Temperatur von 430 Grad Celsius (entspricht 806 F) oder eine entsprechende bei einer etwas anderen Temperatur kann nun dazu verwendet werden, das Trimmverhältnis zu regeln. Das heisst, dass für zunehmende Eintrittsenthalpie E_{FD} bei Erreichen dieses Wertes von T_{HD} das Trimmverhältnis sukzessive erhöht wird, sodass T_{HD} auf diesem Maximalwert gehalten wird.

Treten bei einer derartigen Einstellung des Trimmverhältnisses nun unerwünschte Zustände auf wie z.B. zu wenig Dampf im Niederdruckbereich, zu niedrige Leistung der HD-Turbine oder ein unerwarteter Anstieg der Abdampftemperatur T_{HD}, so kann diese Linie auch zur Regelung des Niederdruckbypasses 18 verwendet werden. Die gleiche Linie (Trim hp_flow) zeigt somit eine mögliche Basis an, auf welcher die Hochdruckturbinen-Abdampftemperatur T_{HD} über entsprechende Einstellung des ND-Umleitventils 19 im Niederdruckbypass 18 eingestellt werden kann. Geht man z.B. näherungsweise davon aus, dass der Druck P₁ in der heißen Zwischenüberhitzerleitung 20 proportional ist zum Druck P₂ in der kalten Zwischenüberhitzerleitung 30, so zeigt sich, dass zur Konstanthaltung des Wertes von T_{HD}, z.B. auf dem hier angegebenen Wert von 430 Grad Celsius, bei ansteigender Eintrittsenthalpie E_{FD} der Druck P₂, resp. damit P₁, gesenkt werden muss.

### BEZEICHNUNGSLISTE

- 1: Kessel
- 2: HD-Turbine
- 3: MD-Turbine
- 4: ND-Turbine
- 5: Kondensator
- 6: Speisewasserbehälter
- 7: Zwischenüberhitzer
- 8: Vorwärmstufen
- 9: Wassereinspritzung
- 10: Frischdampfleitung
- 11: Hochdruckbypass
- 12: HD-Umleitventil
- 13: Bypass Kontrolleinheit
- 14: Einlassventil
- 15: HD-Abdampfleitung
- 16: Rückschlagventil
- 17: HD/MD-Trimmeinheit
- 18: Niederdruckbypass
- 19: ND-Umleitventil
- 20: heisse Zwischenüberhitzerleitung
- 21: Einheit zur Berechnung des Zwischenüberhitzer-Sollwerts
- 22: Abfangventil
- 23: Dampf hinter 3
- 24: Dampf hinter 4
- 25: Kühlmedium
- 26: kondensiertes Wasser
- 27: Entgaser
- 28: entgastes Wasser
- 29: in den Kessel eingeleiteter Dampf
- 30: kalte Zwischenüberhitzerleitung
- 31: Kennlinie für den Drucksollwert bei Turbinenbetrieb
- 32: Kennlinie für minimal zulässigen Druck bei voller Zwischenüberhitzermenge
- 33: natürliche Gleitdruckkennlinie bei Turbinenbetrieb
- 34: Gleitdruckkennlinie bei Bypassbetrieb
- 35: Sollwertlinie für grosse T_{HD} bei p-Regler
- 36: Sollwertlinie für kleine T_{HD} bei p-Regler
- 37: Minimaldruck
- L: an der Dampfturbine anliegende Last
- M: Zwischenüberhitzerdampfmenge, Massenstrom durch den Zwischenüberhitzer
- T_{FD}: Temperatur des Frischdampfes vor der HD-Turbine
- p_{FD}: Druck des Frischdampfes vor der HD-Turbine
- T_{HD}: HD-Abdampftemperatur
- P: Druck vor der HD-Turbinenbeschaufelung
- P₁: Druck in der heissen Zwischenüberhitzerleitung
- P₂: Druck in der kalten Zwischenüberhitzerleitung
- Pₛₒₗₗ: Drucksollwert
- E_{FD}: Hochdruck-Eintrittsenthalpie
- F_{HP}: Massenstrom durch die HD-Turbine
- F_{IP}: Massenstrom durch die MD-, resp. ND-Turbine

## Patentansprüche

1. Verfahren zur Regelung einer Dampfturbinenanlage mit einem zwischen Hochdruckturbine (2) und Mitteldruck- (3) oder Niederdruckturbine (4) angeordneten Zwischenüberhitzer (7), wobei weiterhin ein Niederdruckbypass (18) mit einem ND-Umleitventil (19) vorhanden ist, welcher vom Zwischenüberhitzeraustritt in einen Kondensator (5) führt,
**dadurch gekennzeichnet, dass**
zur Regelung des ND-Umleitventils (19) beim Hochfahren, bei (Teil-) Lastabschaltungen oder bei Leerläufen Kennlinien für den Zwischenüberhitzer-Drucksollwert verwendet werden, welche abhängig sind von wenigstens einem der folgenden ersten Parameter:
an der Anlage anliegenden Last (L); Druck (P) vor der Hochdruckturbinenbeschaufelung; Zwischenüberhitzerdampfmenge (M), als auch zusätzlich von wenigstens einem der folgenden zweiten Parameter:
Hochdruckturbinen-Abdampftemperatur (THD; Temperatur (TFD) des in die Hochdruckturbine eingeleiteten Frischdampfes; Druck (pFD) des in die Hochdruckturbine eingeleiteten Frischdampfes; Zwischenüberhitzerdruck (P2).

2. Verfahren nach Anspruch 1, **dadurch gekennzeichnet, dass** die Kennlinien als Funktion wenigstens eines der ersten Parameter (L, P, M) für unterschiedliche Werte wenigstens eines de zweiten Parameter (T_{HD}, T_{FD}, p_{FD}, P₂) zwischen einer maximalen, vom Drucksollwert bei Turbinenbetrieb bestimmten Kennlinie, und einer minimalen, vom minimal zulässigen Druck bei voller Zwischenüberhitzermenge bestimmten Kennlinie liegen.

3. Verfahren nach einem der Ansprüche 1 oder 2, **dadurch gekennzeichnet, dass** die Kennlinien in Bezug auf den wenigestens einen ersten Parameter (L, P,M) im wesentlichen linear verlaufen.

4. Verfahren nach einem der vorhergehenden Ansprüche, **dadurch gekennzeichnet, dass** die Kennlinien in Bezug auf den wenigstens einen zweiten (T_{HD}, T_{FD}, p_{FD}, P₂) im wesentlichen linear verlaufen.

5. Verfahren nach einem der vorhergehenden Ansprüche, **dadurch gekennzeichnet, dass** für zunehmende Hochdruckturbinen-Abdampftemperatur (T_{HD}), zunehmende Eintrittsenthalpie (H) des in die Hochdruckturbine eingeleiteten Frischdampfes, oder zunehmenden Zwischenüberhitzerdruck (P₂) eine niedrigere Kennlinie für den Zwischenüberhitzer-Drucksollwert verwendet wird.

6. Verfahren nach einem der vorhergehenden Ansprüche, **dadurch gekennzeichnet, dass** als weiterer Regelparameter zur Bestimmung der Kennlinien der Druck (P₁) in der kalten Zwischenüberhitzerleitung vor dem Zwischenüberhitzereintritt verwendet wird.

7. Verfahren nach einem der vorhergehenden Ansprüche, **dadurch gekennzeichnet, dass** zur Regelung des ND-Umleitventils (19) Kennlinien für den Zwischenüberhitzer-Drucksollwert verwendet werden, welche abhängig von der Zwischenüberhitzerdampfmenge (M), von der Hochdruckturbinen-Abdampftemperatur (T_{HD}) und von der Frischdampftemperatur (T_{FD}) sind, und welche in Bezug auf die Zwischenüberhitzerdampfmenge (M) linear und durch einen gemeinsamen Schnittpunkt verlaufen.

8. Verfahren nach Anspruch 7, **dadurch gekennzeichnet, dass** der Sollwert für die Hochdruck-Abdampftemperatur (T_{HD}) durch die Frischdampftemperatur (T_{FD}) bestimmt wird, indem die Hochdruck-Abdampftemperatur (T_{HD}) auf einen Wert geregelt wird, welcher um einen konstanten Wert von insbesondere bevorzugt im Bereich von 100 Grad Celsius unterhalb der Frischdampftemperatur (T_{FD}) liegt, wobei aber der Sollwert für die Hochdruck-Abdampftemperatur (T_{HD}) immer innerhalb eines Bereichs zwischen einem maximalen Wert von insbesondere bevorzugt im Bereich von 320 Grad Celsius und einem minimalen Wert von insbesondere bevorzugt im Bereich von 420 bis 450 Grad Celsius gehalten wird.

9. Verfahren nach Anspruch 8, **dadurch gekennzeichnet, dass** die Kennlinien über einen I-Regler, der multiplikativ oder über eine Minimalauswahl eingreifen kann, kontinuierlich gedreht und damit der Sollwert verringert wird und eine Entlastung der HD-Abdampftemperatur (T_{HD}) erfolgt.

10. Verfahren nach einem der vorhergehenden Ansprüche, **dadurch gekennzeichnet, dass** die Regelung des ND-Umleitventils (19) bei gleichzeitiger Vertrimmung der Hochdruckturbine (2) und der Mitteldruck- (3) resp. Niederdruckturbine (4) über ein in der Frischdampfleitung vor der Hochdruckturbine (2) angeordnetes Einlassventil (14) sowie ein vor der Mitteldruckturbine (3) angeordnetes Abfangventil (22) erfolgt, und dass insbesondere der Vertrimmungszustand ebenfalls zur Ermittlung der relevanten Kennlinien hinzugezogen wird.

## Claims

1. Method for controlling a steam turbine installation having a reheater (7) arranged between high-pressure turbine (2) and medium-pressure turbine (3) or low-pressure turbine (4), a low-pressure bypass (18) with a low-pressure bypass (19) being also present, which low-pressure bypass (18) leads from the reheater outlet into a condenser (5),
**characterized in that**
characteristic curves for the required value of the reheater pressure are used for controlling the low-pressure bypass valve (19) during run-up, during (partial) load rejection procedures or during idling, which characteristic curves depend on at least one of the following first parameters:
load (L) applied to the installation; pressure (P) before the high-pressure turbine blading; reheater steam flow (M), and also additionally on at least one of the following second parameters:
high-pressure turbine exhaust steam temperature (THD; temperature (TFD) of the live steam introduced into the high-pressure turbine; pressure (pFD) of the live steam introduced into the high-pressure turbine; reheater pressure (P2).

2. Method according to Claim 1, **characterized in that** the characteristic curves are located, as a function of at least one of the first parameters (L, P, M) between a maximum characteristic curve, determined by the required pressure value during turbine operation, and a minimum characteristic curve, determined by the minimum permissible pressure at full reheater flow, for different values of at least one of the second parameters (T_{HD}, T_{FD}, p_{FD}, P₂).

3. Method according to one of Claims 1 or 2, **characterized in that** the characteristic curves are essentially linear with respect to the at least one first parameter (L, P, M).

4. Method according to one of the preceding claims, **characterized in that** the characteristic curves are essentially linear with respect to the at least one second (T_{HD}, T_{FD}, p_{FD}, P₂).

5. Method according to one of the preceding claims, **characterized in that** a lower characteristic curve is used for the required reheater pressure value in the case of increasing high-pressure turbine exhaust steam temperature (T_{HD}), increasing inlet enthalpy (H) of the live steam introduced into the high-pressure turbine, or increasing reheater pressure (P₂).

6. Method according to one of the preceding claims, **characterized in that** the pressure (P₁) in the cold reheater main before the reheater inlet is used as a further control parameter for determining the characteristic curves.

7. Method according to one of the preceding claims, **characterized in that** characteristic curves for the required reheater pressure value are used for controlling the low-pressure bypass valve (19), which characteristic curves depend on the reheater steam flow (M), on the high-pressure turbine exhaust steam temperature (T_{HD}) and on the live steam temperature (T_{FD}), and which characteristic curves are linear with respect to the reheater steam flow (M) and extend through a common intersection.

8. Method according to Claim 7, **characterized in that** the required value for the high-pressure exhaust steam temperature (T_{HD}) is determined by the live steam temperature (T_{FD}), the high-pressure exhaust steam temperature (T_{HD}) being controlled to a value which is located around a constant value of preferably, in particular, in the region of 100 degrees Celsius below the live steam temperature (T_{FD}), the required value of the high-pressure exhaust steam temperature (T_{HD}) being always kept, however, within a range between a maximum value of preferably, in particular, in the region of 320 degrees Celsius and a minimum value of preferably, in particular, in the range from 420 to 450 degrees Celsius.

9. Method according to Claim 8, **characterized in that** the characteristic curves are continually rotated by means of an I-controller, which can intervene multiplicatively or by means of a minimum choice, and the required value is therefore reduced and a decrease in the high-pressure exhaust steam temperature (T_{HD}) takes place.

10. Method according to one of the preceding claims, **characterized in that** the control of the low-pressure bypass valve (19) takes place, with simultaneous trimming of the high-pressure turbine (2) and the medium-pressure turbine (3) or low-pressure turbine (4), by means of an inlet valve (14) arranged in the live steam main before the high-pressure turbine (2) and an intercept valve (22) arranged before the medium-pressure turbine (3) and **in that**, in particular, the trimming condition is likewise employed for determining the relevant characteristic curves.

## Revendications

1. Procédé de régulation d'une installation de turbine à vapeur comprenant un surchauffeur intermédiaire (7) disposé entre la turbine haute pression (2) et la turbine moyenne pression (3) ou la turbine basse pression (4), une dérivation basse pression (18) avec une soupape de contournement basse pression (19) étant en outre prévue, laquelle conduit de la sortie du surchauffeur intermédiaire dans un condenseur (5),
**caractérisé en ce que**
pour la régulation de la soupape de contournement basse pression (19) lors du démarrage, en cas de coupures de charge (partielles) ou en cas de marche à vide, des courbes caractéristiques pour la valeur de consigne de pression du surchauffeur intermédiaire sont utilisées, lesquelles dépendent d'au moins l'un des premiers paramètres suivants :
la charge (L) s'appliquant à l'installation ; la pression (P) avant l'aubage de la turbine haute pression ; la quantité de vapeur du surchauffeur intermédiaire (M), ainsi qu'en outre d'au moins l'un des deuxièmes paramètres suivants :
la température de la vapeur d'échappement de la turbine haute pression (THD ; la température (TFD) de la vapeur fraîche introduite dans la turbine haute pression ; la pression (pFD) de la vapeur fraîche introduite dans la turbine haute pression; la pression de surchauffeur intermédiaire (P2).

2. Procédé selon la revendication 1, **caractérisé en ce que** les courbes caractéristiques, en tant que fonction d'au moins l'un des premiers paramètres (L, P, M) pour différentes valeurs d'au moins l'un des deuxièmes paramètres (T_{HD}, T_{FD}, p_{FD}, P₂) se situent entre une courbe caractéristique maximale déterminée par la valeur de consigne de pression lors du fonctionnement de la turbine, et une courbe caractéristique minimale déterminée par la pression minimale admissible lorsque la quantité du surchauffeur intermédiaire est maximale.

3. Procédé selon l'une quelconque des revendications 1 ou 2, **caractérisé en ce que** les courbes caractéristiques s'étendent essentiellement sous forme linéaire par rapport à l'au moins un premier paramètre (L, P, M).

4. Procédé selon l'une quelconque des revendications précédentes, **caractérisé en ce que** les courbes caractéristiques s'étendent essentiellement linéairement par rapport à l'au moins un deuxième (T_{HD}, T_{FD}, p_{FD}, P₂).

5. Procédé selon l'une quelconque des revendications précédentes, **caractérisé en ce que** pour une température de vapeur d'échappement de la turbine haute pression croissante (T_{HD}), une enthalpie d'entrée croissante (H) de la vapeur fraîche introduite dans la turbine haute pression, ou une pression croissante du surchauffeur intermédiaire (P₂), on utilise une courbe caractéristique plus basse pour la valeur de consigne du surchauffeur intermédiaire.

6. Procédé selon l'une quelconque des revendications précédentes, **caractérisé en ce que** l'on utilise en tant que paramètres de régulation supplémentaires pour déterminer les courbes caractéristiques la pression (P₁) dans la conduite du surchauffeur intermédiaire froid avant l'entrée du surchauffeur intermédiaire.

7. Procédé selon l'une quelconque des revendications précédentes, **caractérisé en ce que** pour la régulation de la soupape de contournement basse pression (19), on utilise des courbes caractéristiques pour la valeur de consigne de pression du surchauffeur intermédiaire qui dépendent de la quantité de vapeur du surchauffeur intermédiaire (M), de la température de la vapeur d'échappement de la turbine haute pression (T_{HD}) et de la température de la vapeur fraîche (T_{FD}), et qui s'étendent sous forme linéaire et à travers un point d'intersection commun par rapport à la quantité de vapeur du surchauffeur intermédiaire (M).

8. Procédé selon la revendication 7, **caractérisé en ce que** la valeur de consigne pour la température de la vapeur d'échappement haute pression (T_{HD}) est déterminée par la température de la vapeur fraîche (T_{FD}), **en ce que** la température de la vapeur d'échappement haute pression (T_{HD}) est régulée à une valeur qui est à une valeur constante notamment de préférence de l'ordre de 100° C en dessous de la température de la vapeur fraîche (T_{FD}), mais la valeur de consigne pour la température de la vapeur d'échappement haute pression (T_{HD}) étant toujours maintenue dans une plage entre une valeur maximale de notamment de préférence dans une plage de 320 °C et une valeur minimale de notamment de préférence dans une plage de 420 à 450 °C.

9. Procédé selon la revendication 8, **caractérisé en ce que** les courbes caractéristiques par le biais d'un régulateur intégrateur, qui peut intervenir par multiplication ou par le biais d'une sélection minimale, sont tournées en continu et par conséquent la valeur de consigne est réduite et une détente de la température de la vapeur d'échappement haute pression (T_{HD}) a lieu.

10. Procédé selon l'une quelconque des revendications précédentes, **caractérisé en ce que** la régulation de la soupape de contournement basse pression (19), s'effectue avec un ajustement simultané de la turbine haute pression (2) et de la turbine moyenne pression (3) respectivement de la turbine basse pression (4) par le biais d'une soupape d'admission (14) disposée dans la conduite de vapeur fraîche avant la turbine haute pression (2) ainsi que d'une soupape de coupure (22) disposée avant la turbine moyenne pression (3), et **en ce que** notamment l'état d'ajustement est utilisé également pour déterminer les courbes caractéristiques pertinentes.
